# EUROPEAN PATENT APPLICATION

(11) **EP 4 826 547 A1**
(43) Date of publication of application: **21.10.2026**
(21) Application number: 26170434.0
(22) Date of filing: 02.04.2026
(51) Int. Cl.: G06F 12/02

(54) **SYSTEMS AND METHODS OF DATA REPLICATION IN MEMORY DEVICES**

(30) Priority: 15.04.2025 US 202563789413 P; 25.07.2025 US 202519281557
(71) Applicant: Samsung Electronics Co., Ltd., Suwon-si, Gyeonggi-do 16677 (KR)
(72) Inventor: CHOI, Changho, San Jose, CA, 95134 (US); KI, Yang Seok, San Jose, CA, 95134 (US); RYU, Sungwook, San Jose, CA, 95134 (US); OH, Taeyoung, 16677 Suwon-si, Gyeonggi-do (KR)
(74) Representative: Kuhnen & Wacker Patent- und Rechtsanwaltsbüro PartG mbB

(57) **Abstract**

Provided are systems (100), methods, and apparatuses for data replication in memory devices (115). In one or more examples, the systems (100), devices, and methods include providing an allocation of memory resources of a memory pool appliance to a host (105); selecting a first memory module of multiple memory modules of the memory pool appliance as a primary memory resource of the allocation; selecting at least a second memory module of the multiple memory modules as a secondary memory resource of the allocation; configuring, in a memory switch of the memory pool appliance and for the allocation, a virtual memory module as an interface between the host (105) and memory modules of the allocation; and executing a first command, received at the virtual memory module and from the host (105), to read data based on the allocation.

## Description

### TECHNICAL FIELD

The disclosure relates generally to memory systems. In particular, the subject matter relates to systems and methods of data replication in memory devices.

### BACKGROUND

The present background section is intended to provide context only, and the disclosure of any concept in this section does not constitute an admission that said concept is prior art.

Memory management is a form of resource management applied to computer memory. Some aspects of memory management provide dynamic allocation of portions of memory to programs at their request, and free the allocations for reuse when the portions of memory are no longer needed. Memory management provides functionality for computer systems by providing memory allocations to applications. However, improvements in memory management can be made with regards to high-performance computing, artificial intelligence (Al) systems, etc.

### SUMMARY

In various embodiments, the systems and methods described herein include systems, methods, and apparatuses for data replication in memory devices. In some aspects, the described methods may include providing an allocation of memory resources from a memory pool appliance to a host, selecting a first memory module as a primary memory resource and selecting at least a second memory module as a secondary memory resource for the allocation, configuring in a memory switch a virtual memory module to serve as an interface between the host and the allocated memory modules, and executing a command received from the host at the virtual memory module to read data based on the allocation. In some embodiments, the methods can involve reading data from the secondary memory module based on a status of the first and second memory modules as determined by the memory switch. The memory switch is configured to select the secondary memory module when the status indicates that the first memory module is inaccessible or when the secondary memory module exhibits a lower load store frequency, a reduced workload, lower memory capacity utilization, or a lower temperature than the first memory module. In some embodiments, the methods may include receiving a command from the host to write data to the allocation and writing a first copy of the data to the first memory module and a second copy to the second memory module, as well as presenting to the host a logical representation of the allocation via the virtual memory module. A mapping table that relates the virtual memory module to the allocated memory modules may also be generated, and the allocation may further include a memory module from a second memory pool appliance, with all components operating according to a cache coherent protocol using DRAM or a hybrid memory module.

In some embodiments, the described systems can include a fabric manager to supply an allocation of memory resources from a memory pool appliance to a host and a memory switch configured to select a primary memory module and at least a secondary memory module from the memory pool appliance. The memory switch is further configured to establish a virtual memory module as an interface between the host and the allocated memory modules and to execute a command received from the host for reading data from the allocation. The systems can also involve reading data from the secondary memory module based on the memory module status of both selected modules as determined by the memory switch. The memory switch may select the secondary memory module when the primary memory module is inaccessible and add an additional memory module to the allocation. Alternatively, the selection of the secondary memory module may be based on parameters such as a lower load store frequency, workload, memory capacity utilization, or temperature relative to the primary memory module. The systems additionally support receiving a write command from the host and writing copies of data to both the primary and secondary memory modules, while the virtual memory module provides a logical view of the allocation.

In some embodiments, the described systems can provide a non-transitory computer-readable medium storing instructions executable by a processor to manage the allocation of memory resources of a memory pool appliance to a host. The instructions cause the processor to select a primary memory module among multiple memory modules and at least a secondary memory module, configure a virtual memory module in a memory switch as an interface between the host and the selected memory modules, and execute a command to read data from the allocation based on an instruction received at the virtual memory module. Further instructions direct the processor to read data from the secondary memory module based on a memory module status determined by the memory switch, where the secondary memory module is selected if the status indicates the primary memory module is inaccessible, prompting the addition of a third memory module to the allocation.

A computer-readable medium is disclosed. The computer-readable medium can store instructions that, when executed by a computer, cause the computer to perform substantially the same or similar operations as described herein are further disclosed. Similarly, non-transitory computer-readable media, devices, and systems for performing substantially the same or similar operations as described herein are further disclosed.

The systems and methods of data replication in memory devices (e.g., compute express link (CXL) devices) described herein include multiple advantages and benefits. For example, the data replication systems and methods described herein increase the reliability of memory devices. The systems and methods described herein improve CXL system level reliability, availability, and serviceability (RAS). For example, the data replication systems and methods described herein may increase reliability when a CXL device fails in a CXL memory device. Also, the data replication systems and methods described herein increase the performance of memory devices when memory devices are selected on the basis of workload. Thus, the systems and methods may enable a CXL memory device and/or an application associated with the CXL memory device to continue to operate and remain online when one or more memory devices in the CXL memory device fails.

### BRIEF DESCRIPTION OF THE DRAWINGS

The above-mentioned aspects and other aspects of the present systems and methods will be better understood when the present application is read in view of the following figures in which like numbers indicate similar or identical elements. Further, the drawings provided herein are for purpose of illustrating certain embodiments only; other embodiments, which may not be explicitly illustrated, are not excluded from the scope of this disclosure.

These and other features and advantages of the present disclosure will be appreciated and understood with reference to the specification, claims, and appended drawings, wherein:
FIG. 1 illustrates an example system in accordance with one or more implementations as described herein.
FIG. 2 illustrates details of the system of FIG. 1, according to one or more implementations as described herein.
FIG. 3 illustrates an example system in accordance with one or more implementations as described herein.
FIG. 4 illustrates an example mapping table in accordance with one or more implementations as described herein.
FIG. 5 illustrates an example system in accordance with one or more implementations as described herein.
FIG. 6 depicts a flow diagram illustrating an example method associated with the disclosed systems, in accordance with example implementations described herein.
FIG. 7 depicts a flow diagram illustrating an example method associated with the disclosed systems, in accordance with example implementations described herein.

### DETAILED DESCRIPTION OF VARIOUS EMBODIMENTS

The details of one or more embodiments of the subject matter described herein are set forth in the accompanying drawings and the description below. Other features, aspects, and advantages of the subject matter will become apparent from the description, the drawings, and the claims.

Various embodiments of the present disclosure now will be described more fully hereinafter with reference to the accompanying drawings, in which some, but not all embodiments are shown. Indeed, the disclosure may be embodied in many forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Like numbers refer to like elements throughout. Arrows in each of the figures depict bi-directional data flow and/or bi-directional data flow capabilities. The terms "path," "pathway" and "route" are used interchangeably herein.

Embodiments of the present disclosure may be implemented in various ways, including as computer program products that comprise articles of manufacture. A computer program product may include a non-transitory computer-readable storage medium storing applications, programs, program components, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media includes all computer-readable media (including volatile and non-volatile media).

In one embodiment, a non-volatile computer-readable storage medium may include a floppy disk, flexible disk, hard disk, solid-state storage (SSS) (for example a solid-state drive (SSD)), solid state card (SSC), solid state module (SSM), enterprise flash drive, magnetic tape, or any other non-transitory magnetic medium, and/or the like. A non-volatile computer-readable storage medium may include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may include read-only memory (ROM), programmable read-only memory (PROM), erasable programmable read-only memory (EPROM), electrically erasable programmable read-only memory (EEPROM), flash memory (for example Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may include conductive-bridging random-access memory (CBRAM), phase-change random-access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random-access memory (FJG RAM), Millipede memory, racetrack memory, and/or the like.

In one embodiment, a volatile computer-readable storage medium may include random-access memory (RAM), dynamic random-access memory (DRAM), static random-access memory (SRAM), fast page mode dynamic random-access memory (FPM DRAM), extended data-out dynamic random-access memory (EDO DRAM), synchronous dynamic random-access memory (SDRAM), double data rate synchronous dynamic random-access memory (DDR SDRAM), double data rate type two synchronous dynamic random-access memory (DDR2 SDRAM), double data rate type three synchronous dynamic random-access memory (DDR3 SDRAM), Rambus dynamic random-access memory (RDRAM), Twin Transistor RAM (TTRAM), Thyristor RAM (T-RAM), Zero-capacitor (Z-RAM), Rambus in-line memory component (RIMM), dual in-line memory component (DIMM), single in-line memory component (SIMM), video random-access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may be implemented as methods, apparatus, systems, computing devices, computing entities, and/or the like. As such, embodiments of the present disclosure may take the form of an apparatus, system, computing device, computing entity, and/or the like executing instructions stored on a computer-readable storage medium to perform certain steps or operations. Thus, embodiments of the present disclosure may take the form of a hardware embodiment, a computer program product embodiment, and/or an embodiment that comprises a combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, a hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially, such that one instruction is retrieved, loaded, and executed at a time. In some examples, retrieval, loading, and/or execution may be performed in parallel, such that multiple instructions are retrieved, loaded, and/or executed together. Thus, such embodiments can produce specifically configured machines performing the steps or operations specified in the block diagrams and flowchart illustrations. Accordingly, the block diagrams and flowchart illustrations support various combinations of embodiments for performing the specified instructions, operations, or steps.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not be necessarily all referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms, and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms, and a plural term may include the corresponding singular form. It is further noted that various figures (including component diagrams) shown and discussed herein are for illustrative purpose only, and are not drawn to scale. Similarly, various waveforms and timing diagrams are shown for illustrative purpose only. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some embodiments and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly referenced parts/modules are the only way to implement some of the embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on chip (SoC), an assembly, and so forth.

The provided description is presented to enable one of ordinary skill in the art to make and use the subject matter disclosed herein and to incorporate it in the context of particular applications. While the following is directed to specific examples, other and further examples may be devised without departing from the basic scope thereof.

Various modifications, as well as a variety of uses in different applications, will be readily apparent to those skilled in the art, and the general principles defined herein may be applied to a wide range of embodiments. Thus, the subject matter disclosed herein is not intended to be limited to the embodiments presented, but is to be accorded the widest scope consistent with the principles and novel features disclosed herein.

In the description provided, numerous specific details are set forth in order to provide a more thorough understanding of the subject matter disclosed herein. It will, however, be apparent to one skilled in the art that the subject matter disclosed herein may be practiced without necessarily being limited to these specific details. In other instances, well-known structures and devices are shown in block diagram form, rather than in detail, in order to avoid obscuring the subject matter disclosed herein.

All the features disclosed in this specification (e.g., any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Various features are described herein with reference to the figures. It should be noted that the figures are only intended to facilitate the description of the features. The various features described are not intended as an exhaustive description of the subject matter disclosed herein or as a limitation on the scope of the subject matter disclosed herein. Additionally, an illustrated example need not have all the aspects or advantages shown. An aspect or an advantage described in conjunction with a particular example is not necessarily limited to that example and can be practiced in any other examples even if not so illustrated, or if not so explicitly described.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

It is noted that, if used, the labels left, right, front, back, top, bottom, forward, reverse, clockwise and counterclockwise have been used for convenience purposes only and are not intended to imply any particular fixed direction. Instead, the labels are used to reflect relative locations and/or directions between various portions of an object.

Data processing may include data buffering, aligning incoming data from multiple communication lanes, forward error correction (FEC), etc. For example, data may be received by an analog front end (AFE), which can prepare the incoming data for digital processing. The digital portion of the transceivers (e.g., digital signal processor (DSP)) may provide skew management, equalization, reflection cancellation, and/or other functions. It is to be appreciated that the process described herein can provide many benefits, including saving both power and cost.

Moreover, the terms "system," "component," "module," "interface," "model," or the like are generally intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a controller and the controller can be a component. One or more components may reside within a process and/or thread of execution and a component may be localized on one computer and/or distributed between two or more computers.

Unless explicitly stated otherwise, each numerical value and range may be interpreted as being approximate, as if the word "about" or "approximately" preceded the value of the value or range. Signals and corresponding nodes or ports might be referred to by the same name and are interchangeable for purposes here.

While embodiments may have been described with respect to circuit functions, the embodiments of the subject matter disclosed herein are not limited. Possible implementations may be embodied in a single integrated circuit, a multi-chip module, a single card, SoC, or a multi-card circuit pack. As would be apparent to one skilled in the art, the various embodiments might also be implemented as part of a larger system. Such embodiments may be employed in conjunction with, for example, a digital signal processor, microcontroller, field-programmable gate array, application-specific integrated circuit, or general-purpose computer.

As would be apparent to one skilled in the art, various functions of circuit elements may also be implemented as processing blocks in a software program. Such software may be employed in, for example, a digital signal processor, microcontroller, or general-purpose computer. Such software may be embodied in the form of program code embodied in tangible media, such as magnetic recording media, optical recording media, solid-state memory, floppy diskettes, CD-ROMs, hard drives, or any other non-transitory machine-readable storage medium, that when the program code is loaded into and executed by a machine, such as a computer, the machine becomes an apparatus for practicing the subject matter disclosed herein. When implemented on a general-purpose processor, the program code segments combine with the processor to provide a unique device that operates analogously to specific logic circuits. Described embodiments may also be manifest in the form of a bit stream or other sequence of signal values electrically or optically transmitted through a medium, stored magnetic-field variations in a magnetic recording medium, etc., generated using a method and/or an apparatus as described herein.

Compute express link (CXL) memory can include technology that expands memory capacity beyond what is available with some random-access memory systems (e.g., dynamic random-access memory (DRAM)). CXL can allow for greater memory bandwidth and capacity based on implementing a high-speed, cache-coherent interconnect, allowing processors (e.g., central processor unit (CPU)) to access shared memory on attached devices, effectively pooling and sharing memory resources. CXL can include high-speed, low-latency processor-to-device interconnect technology built on the peripheral component interconnect express (PCIe) physical layer.

Compute express link (CXL) technology can include CXL memory modules. CXL memory modules can include CXL memory DRAM modules of DRAM memory (CMM-D), CXL memory hybrid modules of DRAM and NAND flash memory (CMM-H), CXL memory module boxes (CMM-B), etc. CMM-D or CMM-H can expand the memory capacity of a server and allow for memory pooling and sharing across multiple servers. CMM-D or CMM-H can include a memory expander that provides increased memory capacity and bandwidth in systems without increasing the number of primary CPU memory channels. CMM-D or CMM-H may be designed to address the limitations of traditional memory expansion in high-performance servers and may be used in memory-intensive workloads such as artificial intelligence (AI) workloads, machine learning (ML) workloads, high-performance computing (HPC) workloads, in-memory database workloads, etc. A CMM-B may include a storage device that may include one or more CMM-D and/or one or more CMM-H. A CMM-B may be configured to occupy a slot in a storage rack (e.g., a rack-mountable chassis). For example, a CMM-B may be a memory pooling appliance or may include a memory pooling appliance for rack computing. A CMM-B may provide a pool of memory that can be shared across multiple servers in a rack, providing flexible memory allocation and expansion, decoupled from compute resources.

In some examples, a CMM-B may connect to one or more hosts. The CMM-B may include memory resources and may provide dynamic allocations of these memory resources to the one or more hosts. For example, the CMM-B may provide a dynamic allocation of the memory resources to an application executing on a host. For instance, the CMM-B may allocate at least a portion of memory of a CMM-D and/or CMM-H to the application. With some systems, a CMM-B may experience an application crash and/or system crash when a memory module in the CMM-B fails (e.g., one CMM-D fails, one CMM-H fails). For example, a CMM-D or CMM-H may provide memory resources to the application based on the allocation, and when this CMM-D or CMM-H fails, the application and/or related system (e.g., CMM-B) may crash.

The systems and methods described herein may implement data replication in a memory device (e.g., CMM-B, CXL switch of CMM-B, fabric manager of CMM-B) to avoid an application crash and/or a system crash when a memory module in the CMM-B fails (e.g., a CMM-D fails, a CMM-H fails). The data replication may be implemented transparently. For example, the data replication may be implemented on a CMM-B without changing CXL protocols, independent of the host, without host intervention, without the host being aware of the data replication, etc.

In some cases, the data replication may include an active memory module of the CMM-B and one or more standby memory modules of the CMM-B. For example, an allocation to an application may be linked with an active memory module and one or more standby memory modules. When the active memory module fails, the CMM-B (e.g., in conjunction with a CXL switch and/or fabric manager) may use at least one of the standby memory modules to service memory operations for the allocation. In some cases, the CMM-B may configure the activated standby memory module as the new active memory module. In some cases, the CMM-B may configure an available memory module as the new active memory module, bring it online, and switch to the new active memory module for memory operations, maintaining the activated standby memory module as a standby memory module of the allocation. When a standby memory module fails and the active memory module remains online, then the CMM-B (e.g., in conjunction with a CXL switch and/or fabric manager) may configure another standby memory module to replace the failed standby memory module.

The systems and methods described may include using an available device (e.g., an available CMM-D) of an allocation to serve data when another device (e.g., a CMM-D) of the allocation fails. Some systems may not consider availability enhancement, including data redundancy. Some systems may not implement policy-based service resources selection to serve requests. Some systems may implement a cluster level availability through multiple switches.

The systems and methods described herein may provide availability enhancement with data redundancy and/or policy-based service resources selection to serve requests. The systems and methods described herein may implement data replication in a single memory pool appliance (e.g., single CXL memory box).

The systems may include a CXL switch configured to replicate data and write data to multiple CXL devices (e.g., CMM-Ds) in a CXL memory appliance (e.g., CMM-B). The data replication systems and methods described herein may be based on an upstream port logical device (LD) to a downstream port LD mapping table and/or a performance statistics management table. The data replication systems and methods described herein may be based on a device selection policy and/or a data service policy. Memory device reliability improvements may be based on data replication across multiple memory devices (e.g., multiple CXL devices). When one or multiple devices fail, one of available devices may be configured to service data.

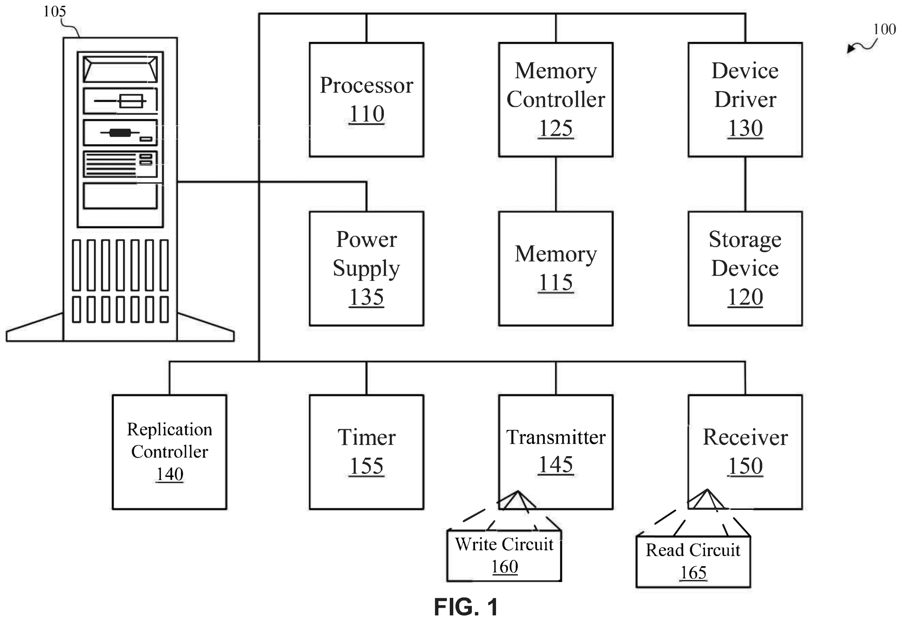

**FIG. 1** illustrates an example system 100 in accordance with one or more implementations as described herein. In FIG. 1, machine 105, which may be termed a host, a system, or a server, is shown. While FIG. 1 depicts machine 105 as a tower computer, embodiments of the disclosure may extend to any form factor or type of machine. For example, machine 105 may be a rack server, a blade server, a desktop computer, a tower computer, a mini tower computer, a desktop server, a laptop computer, a notebook computer, a tablet computer, etc.

Machine 105 may include processor 110, memory 115, and storage device 120. Processor 110 may be any variety of processor. It is noted that processor 110, along with the other components discussed below, are shown outside the machine for ease of illustration: embodiments of the disclosure may include these components within the machine. While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, DRAM, SRAM, Persistent Random-access memory, Ferroelectric Random-access memory (FRAM), or Non-Volatile Random-access memory (NVRAM), such as Magnetoresistive Random-access memory (MRAM), Phase Change Memory (PCM), or Resistive Random-Access Memory (ReRAM). Memory 115 may include volatile and/or non-volatile memory. Memory 115 may use any desired form factor: for example, Single In-Line Memory Module (SIMM), Dual In-Line Memory Module (DIMM), Non-Volatile DIMM (NVDIMM), etc. Memory 115 may be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may support an operating system under which various applications may be running. These applications may issue requests (which may be termed commands) to read data from or write data to either memory 115 or storage device 120. When storage device 120 is used to support applications reading or writing data via some sort of file system, storage device 120 may be accessed using device driver 130. While FIG. 1 shows one storage device 120, there may be any number (one or more) of storage devices in machine 105. Storage device 120 may support any desired protocol or protocols, including, for example, the Non-Volatile Memory Express (NVMe^{®}) protocol, a Serial Attached Small Computer System Interface (SCSI) (SAS) protocol, or a Serial AT Attachment (SATA) protocol. Storage device 120 may include any desired interface, including, for example, a Peripheral Component Interconnect Express (PCIe^{®}) interface, or a Compute Express Link (CXL^{®}) interface. Storage device 120 may take any desired form factor, including, for example, a U.2 form factor, a U.3 form factor, a M.2 form factor, Enterprise and Data Center Standard Form Factor (EDSFF) (including all of its varieties, such as E1 short, E1 long, and the E3 varieties), or an Add-In Card (AIC).

While FIG. 1 uses the term "storage device," embodiments of the disclosure may include any storage device formats that may benefit from the use of computational storage units, examples of which may include hard disk drives, Solid State Drives (SSDs), or persistent memory devices, such as PCM, ReRAM, or MRAM. Any reference to "storage device" "SSD" below should be understood to include such other embodiments of the disclosure and other varieties of storage devices. In some cases, the term "storage unit" may encompass storage device 120 and memory 115. Machine 105 may include power supply 135. Power supply 135 may provide power to machine 105 and its components.

Machine 105 may include transmitter 145 and receiver 150. Transmitter 145 or receiver 150 may be respectively used to transmit or receive data. In some cases, transmitter 145 and/or receiver 150 may be used to communicate with memory 115 and/or storage device 120. Transmitter 145 may include write circuit 160, which may be used to write data into storage, such as a register, in memory 115 and/or storage device 120. In a similar manner, receiver 150 may include read circuit 165, which may be used to read data from storage, such as a register, from memory 115 and/or storage device 120. In some cases, the systems and methods described herein may be based on transmitter 145, receiver 150, write circuit 160, and/or read circuit 165.

In the illustrated example, machine 105 may include timer 155, which may be used to time one or more operations, indicate or measure a time period (e.g., in relation to load/store frequency, device utilization, etc.), indicate a lapse of time, indicate an expiration, indicate a timeout, etc.

In one or more examples, machine 105 may be implemented with any type of apparatus. Machine 105 may be configured as (e.g., as a host of) one or more servers, such as a compute server, a storage server, storage node, a network server, a supercomputer, data center system, and/or the like, or any combination thereof. Additionally, or alternatively, machine 105 may be configured as (e.g., as a host of) one or more computers, such as a workstation, a personal computer, a tablet, a smartphone, and/or the like, or any combination thereof. Machine 105 may be implemented with any type of apparatus that may be configured as a device including, for example, an accelerator device, a storage device, a network device, a memory expansion and/or buffer device, a central processing unit (CPU), a graphics processing unit (GPU), a neural processing unit (NPU), a tensor processing unit (TPU), optical processing units (OPU), and/or the like, or any combination thereof.

Any communication between devices including machine 105 (e.g., host, computational storage device, and/or any intermediary device) can occur over an interface that may be implemented with any type of wired and/or wireless communication medium, interface, protocol, and/or the like including PCIe, NVMe, Ethernet, NVMe-oF, Compute Express Link (CXL), and/or a coherent protocol such as CXL.mem, CXL.cache, CXL.IO and/or the like, Gen-Z, Open Coherent Accelerator Processor Interface (OpenCAPI), Cache Coherent Interconnect for Accelerators (CCIX), Advanced eXtensible Interface (AXI) and/or the like, or any combination thereof, Transmission Control Protocol/Internet Protocol (TCP/IP), FibreChannel, InfiniBand, Serial AT Attachment (SATA), Small Computer Systems Interface (SCSI), Serial Attached SCSI (SAS), iWARP, any generation of wireless network including 2G, 3G, 4G, 5G, and/or the like, any generation of Wi-Fi, Bluetooth, near-field communication (NFC), and/or the like, or any combination thereof. In some embodiments, the communication interfaces may include a communication fabric including one or more links, buses, switches, hubs, nodes, routers, translators, repeaters, and/or the like. In some embodiments, system 100 may include one or more additional apparatus having one or more additional communication interfaces.

As shown, machine 105 may include replication controller 140. In some examples, replication controller 140 may include logic (e.g., logic circuit, electrical circuit), hardware (e.g., processing unit, memory, storage), software, firmware, and the like. In some cases, replication controller 140 may perform one or more functions in conjunction with processor 110. In some cases, at least a portion of replication controller 140 may be implemented in or by processor 110 and/or memory 115. The one or more logic circuits of replication controller 140 may include any one or combination of multiplexers, registers, logic gates, arithmetic logic units (ALUs), cache, computer memory, microprocessors, processing units (CPUs, GPUs, NPUs, and/or TPUs), FPGAs, ASICs, etc., that enable replication controller 140 to provide data replication in memory devices.

Any of the functionality described herein, including any of the host functionality, device functionally, replication controller 140 functionality, and/or the like, may be implemented with hardware, software, firmware, or any combination thereof including, for example, hardware and/or software combinational logic, sequential logic, timers, counters, registers, state machines, volatile memories such as at least one of or any combination of the following: DRAM and/or SRAM, nonvolatile memory including flash memory, persistent memory such as cross-gridded nonvolatile memory, memory with bulk resistance change, PCM, and/or the like and/or any combination thereof, complex programmable logic devices (CPLDs), field programmable gate arrays (FPGAs), application specific integrated circuits (ASICs), CPUs including CISC processors such as x86 processors and/or RISC processors such as RISC-V and/or advanced RISC machine (ARM) processors, GPUs, NPUs, TPUs, OPUs, and/or the like, executing instructions stored in any type of memory. In some embodiments, one or more components of replication controller 140 may be implemented as an SoC.

In one or more examples, replication controller 140 may be based on and/or may incorporate a memory switch (e.g., CXL switch) and/or a fabric manager. Replication controller 140 may be implemented in a memory pooling device (e.g., CMM-B) and/or a host (e.g., machine 105). In one or more examples, replication controller 140 may enable a CXL memory pool appliance and/or application associated with the CXL memory pool appliance to continue to operate and remain online when one or more memory modules in the CXL memory pool appliance fails.

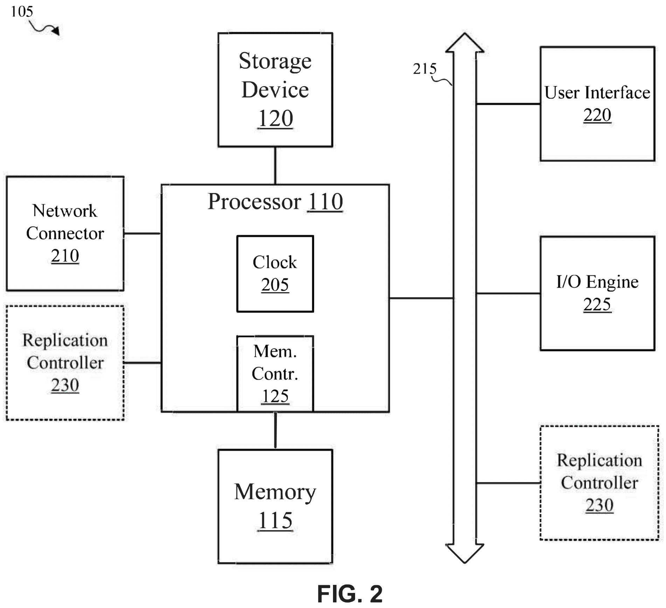

**FIG. 2** illustrates details of machine 105 of FIG. 1, according to examples described herein. In the illustrated example, machine 105 may include processor 110. Processor 110 may include one or more processors and/or one or more dies. Processor 110 may include memory controller 125 (e.g., one or more memory controllers) and clock 205 (e.g. one or more clocks), which may be used to coordinate the operations of the components of the machine. Processor 110 may be coupled to memory 115 (e.g., one or more memory chips, stacked memory, etc.), which may include random-access memory (RAM), read-only memory (ROM), or other state preserving media, as examples. Processor 110 may be coupled to storage device 120 (e.g., one or more storage devices), and to network connector 210, which may be, for example, an Ethernet connector or a wireless connector. Processor 110 may be connected to bus 215 (e.g., one or more buses), to which may be attached user interface 220 (e.g., one or more user interfaces) and Input/Output (I/O) interface ports that may be managed using I/O engine 225 (e.g., one or more I/O engines), among other components. As shown, processor 110 may be coupled to replication controller 230, which may be an example of replication controller 140 of FIG. 1. Additionally, or alternatively, processor 110 may be connected to bus 215, to which may be attached replication controller 230.

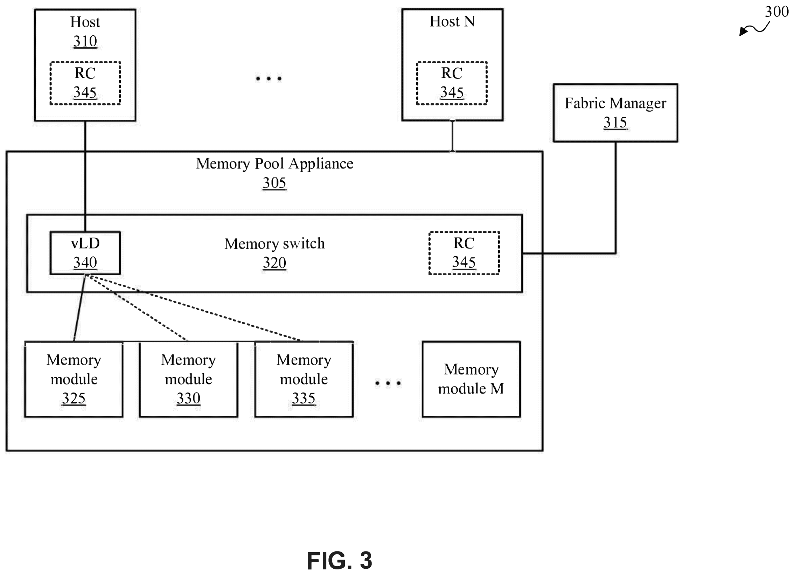

FIG. 3 illustrates an example system 300 in accordance with one or more implementations as described herein. In some configurations, one or more aspects of system 300 may be implemented by a replication controller inside a memory pool appliance and/or in conjunction with replication controller 140 of FIG. 1 and/or replication controller 230 of FIG. 2. In some configurations, one or more aspects of system 300 may be implemented by or in conjunction with machine 105, components of machine 105, or any combination thereof.

In the illustrated example, system 300 may include memory pool appliance 305, N hosts (e.g., including host 310, where N is a positive integer, such as 1, 10, 100, 1000, etc.), and fabric manager 315. As shown, memory pool appliance 305 may connect to one or more hosts (e.g., host 310). Memory pool appliance 305 may include memory switch 320 and M memory modules. Memory switch 320 may be based on, incorporate, and/or include a CXL switch. Memory switch 320 may be incorporated in an SoC. The depicted M memory modules may include one or more memory modules (e.g., memory module 325, memory module 330, memory module 335, etc.), where M is a positive integer (e.g., 1, 10, 100, 1000, etc.). The depicted M memory modules may include DRAM memory modules (e.g., CMM-D) and/or hybrid memory modules (e.g., CMM-H of DRAM and NAND flash memory).

Fabric manager 315 can include application logic that manages system composition and resource allocation within a fabric (e.g., CXL fabric) of system 300. Fabric manager 315 can be part of device firmware, run in a baseboard management controller (BMC) or microcontroller (e.g., allocation controller 140), etc. Fabric manager 315 may reside on a host (e.g., host 310), a memory pool appliance (e.g., memory pool appliance 305), a server or rack device associated with the host or memory pool appliance, etc. Fabric manager 315 may manage the allocation and utilization of resources within a fabric of system 300, such as memory and device access. Fabric manager 315 may manage memory pooling, binding ports to hosts, and/or assigning resources to virtual resources associated with system 300.

In some examples, host 310 (e.g., via fabric manager 315) may generate an allocation of memory from at least one memory module of memory pool appliance 305 (e.g., allocation from memory module 325, memory module 330, and/or memory module 335). In some cases, the allocation may be generated based on an application executed by host 310. Based on the allocation, memory switch 320 may link a host of system 300 (e.g., host 310) to at least one memory module (e.g., memory module 325, memory module 330, memory module 335, etc.). A link from a host to memory switch 320 may be referred to as an upstream link. A link from memory switch 320 to a memory module may be referred to as a downstream link.

With CXL, a logical device (LD) can represent a distinct unit of memory or resources managed by a CXL device. While a CXL device manages an LD, a host or an application of a host may use the LD (e.g., access memory resources via the LD) after the LD is allocated by a fabric manager (e.g., fabric manager 315). An LD can be a virtual abstraction of a physical CXL device (e.g., memory module 325, memory module 330, memory module 335, etc.), allowing for flexible memory allocation and resource sharing between hosts. In some cases, multiple hosts can access different portions of the same physical memory module via logical devices, enabling memory pooling and sharing.

The solid line to memory module 325 may indicate that, based on the allocation, at least a portion of memory module 325 is configured or selected (e.g., via fabric manager 315) as an active logical device to host 310. In some cases, memory switch 320 may select one or more additional memory modules as standby logical devices of the allocation. In the illustrated example, the dashed lines to memory module 330 and memory module 335 may indicate that, based on the allocation, at least a portion of memory module 330 and memory module 335, respectively, are configured or selected (e.g., via fabric manager 315) as standby logical devices of host 310. In some cases, a first portion of the memory resources of memory module 325 may be assigned as a first active logical device (e.g., to host 310) of a first allocation and/or a second portion of the memory resources of memory module 325 (e.g., different from the first portion) may be assigned as a second active logical device of a second allocation. In some cases, a third portion of the memory resources of memory module 325 may be assigned as a first standby logical device of the first allocation, the second allocation, or a third allocation. In some cases, a fourth portion of the memory resources of memory module 325 may be assigned as a second standby logical device of the first allocation, the second allocation, the third allocation, or a fourth allocation.

Host 310 may perform one or more memory operations with the one or more memory modules of memory pool appliance 305 based on the allocation. For example, the application running on host 310 may perform load/store operations with at least one memory module (e.g., memory module 325, memory module 330, and/or memory module 335). The application may store or write application data to the one or more memory modules, load or read application data from the one or more memory modules, etc.

When host 310 executes the application, some data associated with executing the application may be stored in and/or loaded from the active logical device (e.g., memory module 325). If the active logical device fails or goes offline, then with some systems, the memory pool appliance may fail or go offline. In some cases, an application crash and/or a system crash (e.g., crash of system 300, crash of memory pool appliance 305, etc.) when a memory module of a memory pool appliance fails or goes offline. For example, the application running on host 310 may crash or fail based on the active logical device failing or going offline, which may occur based on the application having no access to the application data on the failed memory module.

The systems and methods described herein may include an allocation of memory resources. In some examples, fabric manager 315 may allocate memory to a host. For example, fabric manager 315 may create a memory allocation and grant the memory allocation to host 310 (e.g., via an upstream port of memory switch 320). In some cases, based on the allocation, fabric manager 315 or memory switch 320 may configure a virtual logical device (e.g., vLD) as a logical representation of the allocation for host 310. For example, fabric manager 315 or memory switch 320 may configure vLD 340 as an interface between host 310 and the allocation (e.g., downstream logical devices of the allocation, such as an active LD, one or more standby LDs, etc.). Thus, vLD 340 may enable host 310 to view, access, and/or interact with the memory resources of the allocation.

Based on the granting of the allocation, memory switch 320 may select a memory module (e.g., an LD in the downstream ports of memory switch 320) as an active memory module or active LD of the allocation (e.g., memory module 325). In some cases, based on the allocation, memory switch 320 may select one or more memory modules (e.g., one or more LDs in the downstream ports of memory switch 320) as one or more respective standby memory modules or standby LDs (e.g., memory module 330 and/or memory module 335, etc.). The number of standby memory modules may be configurable based on a default value, user assigned, and/or dynamically assigned. For example, memory switch 320 may select an initial number of standby memory modules based on the application (e.g., application type, amount of memory requested by the application, a number of standby memory modules requested by the application), based on an amount of memory resources available for allocation, etc. In some cases, memory switch 320 may increase an allocation or decrease an allocation based on a request by the application and/or memory switch 320 monitoring the allocation and determining the application is not using all of the allocation or that execution of the application would improve by increasing the allocation. The multiple downstream LDs (e.g., active and standby LDs based on memory resources or at least portions of memory module 325, memory module 330, and/or memory module 335, etc.) may be linked to the upstream vLD (e.g., vLD 340).

In some examples, memory switch 320 may configure a mapping table based on the allocation and configuration of LDs. For example, memory switch 320 may configure a mapping table that maps vLD 340 to the active LD of the allocation (e.g., memory module 325), and/or maps vLD 340 to at least one of the standby LDs (e.g., memory module 330, memory module 335, etc.). Thus, when host 310 sends a read command or write command to vLD 340, the mapping table may enable memory switch 320 to identify the downstream active LD and/or standby LDs associated with vLD, and execute the command based on the memory resources of the downstream active LD and/or standby LDs. In some cases, memory switch 320 may finalize the allocation (e.g., based on configuring the mapping table). In some cases, memory switch 320 may indicate (e.g., to host 310) that the allocation is configured and available to the host.

The systems and methods described herein may include writing data to the memory resources of an allocation. For example, host 310 may send a command to write data to vLD 340. Based on the mapping table, memory switch 320 may write the data to the active LD mapped to vLD 340 (e.g., memory module 325). In some cases, based on the mapping table, memory switch 320 may identify the one or more standby LDs mapped to vLD 340 (e.g., memory module 325 and/or memory module 330) and replicate the data of the write command to the one or more standby LDs.

The systems and methods described herein may include reading data from the memory resources of an allocation. In some cases, host 310 may read data from the allocation based on a read command. For example, host 310 may send a read command to read data from vLD 340. Based on the mapping table, memory switch 320 may read the requested data from the active LD mapped to vLD 340 and provide the read data to the host 310 (e.g., to the application of host 310).

The systems and methods described herein may include maintaining an allocation based on a memory module status (e.g., memory module failure, etc.). In some examples, host 310 may send a read command to vLD 340. Based on the mapping table, memory switch 320 may identify the active LD and/or at least one standby LD mapped to vLD 340. In some cases, memory switch 320 may determine that the active LD (e.g., memory module 325) is unavailable or inaccessible (e.g., memory module 325 does not respond, memory module 325 returns an error code or failure code, etc.). Based on memory switch 320 determining the active LD is unavailable, memory switch 320 may select a standby LD (e.g., memory module 330 or memory module 335) and read the requested data from the selected standby LD.

In some cases, memory switch 320 may remove the active LD from the mapping table entries for this allocation. Memory switch 320 may promote a standby LD of the allocation (e.g., memory module 330 or memory module 335) as a new active LD. In some cases, based on promoting a standby LD to be a new active LD, memory switch 320 may configure a new standby LD to replace the promoted standby LD in the allocation. Thus, memory switch 320 may maintain an active LD and the same number of standby LDs of the allocation based on the failure of an LD (e.g., failure of an active LD or standby LD). Memory switch 320 may replicate the allocation data (e.g., data of the new active LD, data of one or more standby LDs of the allocation) to the new standby LD. The new standby LD may be from the same memory pool appliance of the active LD or from another memory pool appliance.

The systems and methods described herein may be based on and/or may incorporate a device selection policy. For example, memory switch 320 may implement a device selection policy associated with a given allocation. The device selection policy may include criteria for selecting a logical device (e.g., active logical device or standby logical device) based on a memory operation requested by host 310 (e.g., a read command, write command, etc.).

In some cases, the device selection policy may be based on a workload-based criteria. For example, to serve a memory request from host 310, memory switch 320 may select a logical device (e.g., active LD or standby LD) that is idle or has a relatively low workload compared to other logical devices of the allocation. In some cases, the workload may be measured based on average load/store frequency over some time period (e.g., 1 millisecond, 1 sec, etc.).

In some cases, the device selection policy may be based on a utilization-based criteria. For example, to serve a memory request from host 310, memory switch 320 may select a logical device (e.g., active LD or standby LD) with a lower utilization (e.g., in terms of device capacity). For example, device selection may be based on memory switch 320 determining device status of one or more logical devices (e.g., capacity, power usage, process utilization, throughput, busy rate or average accesses over some time period, average active time over some time period, average idle time over some time period, etc.) and selecting the logical device of the allocation with the lowest utilization.

In some cases, the device selection policy may be based on a hybrid-based criteria. For example, memory switch 320 may select a logical device based on a hybrid value (e.g., hValue) of the logical device, where the hybrid value is based on a combination of performance and utilization, etc. For example, memory switch 320 may select a logical device to serve a memory request from host 310 based on the hValue of a logical device relative to the hValue of one or more other logical devices of the allocation. In some cases, hValue = α*(IO frequency/sum of IO frequency for LDs belong to vLD) + β*(capacity utilization), where α may be a first weight or first constant associated with device workload metrics and β may be a second weight or second constant associated with device utilization metrics. In some cases, α and/or β may be default values, user-selected values, etc.

In some cases, the device selection policy may be based on a service-based criteria. In some cases, memory switch 320 may default in selecting the active LD of an allocation to serve memory requests of host 310. Additionally, or alternatively, memory switch 320 may select any available logical device of the allocation (e.g., active LD and/or standby LD) to serve a memory request. In some cases, memory switch 320 may select two or more logical devices (e.g., active LD and/or one or more standby LDs) to serve a memory request of host 310. In some cases, memory switch 320 may select the logical device with the lowest workload, the least busy or most idle logical device among the logical devices of the allocation based on average or current performance (e.g., throughput, workload, utilization, etc.).

In some examples, memory switch 320 may select a logical device (e.g., an active LD or standby LD) to execute a memory operation (e.g., read, write, etc.). When memory switch 320 determines that the selected memory module (e.g., memory module 330) is unavailable, fails, is offline, or is inaccessible, then memory switch 320 may select another memory module of the allocation (e.g., memory module 335) and execute the memory operation using the other memory module in place of the selected memory module.

As shown, host 310 may include a replication controller (e.g., replication controller (RC) 345). Additionally, or alternatively, host N may include a replication controller (e.g., RC 345) and/or memory switch 320 may include a replication controller (e.g., RC 345). RC 345 may represent one resource controller in one device or multiple resource controllers in multiple respective devices. One or more operations described herein may be performed at least partially by RC 345 in one or more devices of system 300. RC 345 may be implemented by or in conjunction with replication controller 140 of FIG. 1 and/or replication controller 230 of FIG. 2. In some examples, RC 345 may provide an allocation of memory resources of memory pool appliance 305 to a host of system 300 (e.g., host 310). RC 345 may be configured to select a first memory module of multiple memory modules of memory pool appliance 305 (e.g., memory module 325) as a primary memory resource of the allocation. In some cases, RC 345 may be configured to select at least a second memory module of the multiple memory modules (e.g., memory module 330) as a secondary memory resource of the allocation. In some implementations, RC 345 may configure, in memory switch 320 and for the allocation, a virtual memory module (e.g., vLD 340) as an interface between host 310 and memory modules of the allocation. In some cases, RC 345 may execute a first command based on receiving, at vLD 340 and from host 310, a first command to read data from the allocation.

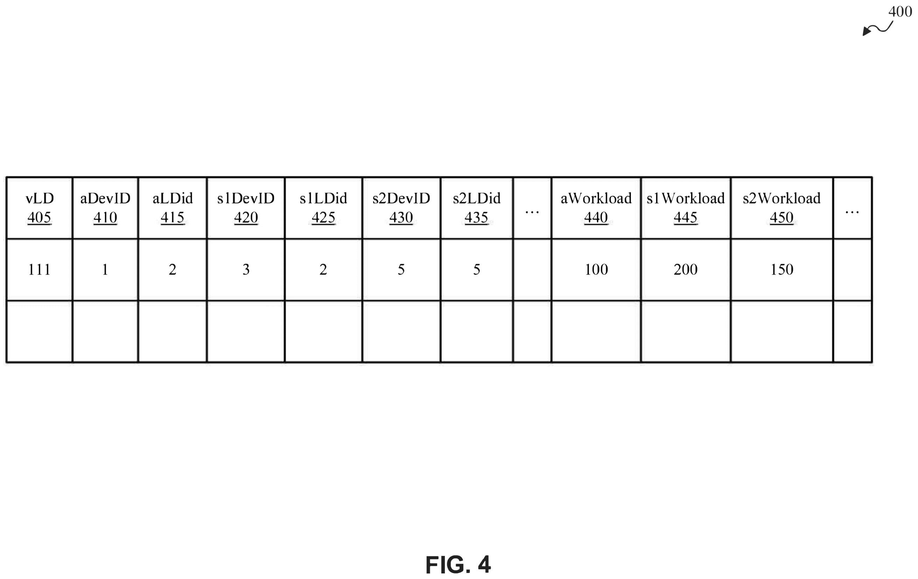

**FIG. 4** illustrates an example mapping table 400 in accordance with one or more implementations as described herein. In some configurations, one or more aspects of mapping table 400 may be implemented by a replication controller inside a memory pool appliance or in conjunction with replication controller 140 of FIG. 1 and/or replication controller 230 of FIG. 2. In some configurations, one or more aspects of mapping table 400 may be implemented by or in conjunction with machine 105, components of machine 105, or any combination thereof.

Mapping table 400 may be based on and/or include a logical device (LD) mapping table. As shown, mapping table 400 may include one or more fields. For example, mapping table 400 may include fields for a virtual logical device, an active logical device, a standby logical device, etc. As shown, mapping table 400 may include fields for a virtual logical device (old) 405 (e.g., vLD 340), active device ID (aDevID) 410, active logical device ID (aLDid) 415. When a memory switch (e.g., memory switch 320) configures an active LD based on an allocation, an identifier may be assigned to the active LD (e.g., aLDid 415). The identifier of the active LD may be assigned by memory switch 320 and/or fabric manager 315. In some cases, aDevID 410 may refer to the ID of the memory module associated with the active LD. For example, if the active LD is associated with (e.g., located in, based on memory of) memory module 325, then aDevID 410 may refer to the device ID of memory module 325.

In some cases, mapping table 400 may include fields for a first standby device ID (s1DevlD) 420, a first standby logical device ID (s1LDid) 425, a second standby device ID (s2DevID) 430, a second standby logical device ID (s2LDid) 435, an active workload (aWorkload) 440, first standby workload (s1Workload) 445, and second standby workload (s2Workload) 450. When a memory switch (e.g., memory switch 320) configures a first standby LD based on an allocation, an identifier may be assigned to this first standby LD (e.g., s1LDid 425). The identifier of the first standby LD may be assigned by memory switch 320 and/or fabric manager 315. In some cases, s1DevID 420 may refer to the ID of the memory module associated with the first standby LD. For example, if the first standby LD is associated with (e.g., located in, based on memory of) memory module 330, then s1DevID 420 may refer to the device ID of memory module 330. Similar operations may apply, respectively, to s2DevID 430 and s2LDid 435.

As shown, mapping table 400 may include values associated with the indicated fields. For example, mapping table 400 may include a value or identifier for vLD 405 (e.g., 111), a value or identifier for aDevID 410 (e.g., 1), a value or identifier for aLDid 415 (e.g., 2), etc. Mapping table 400 may include a value or identifier for aWorkload 440 (e.g., 100), a value or identifier for s1Workload 445 (e.g., 200), a value or identifier for s2Workload 450 (e.g., 150). In some cases, a value of a workload in mapping table 400 may indicate a performance metric or benchmark related to latency (e.g., in nanoseconds), bandwidth, average load/store frequency (e.g., over a given time period, per millisecond, per second, etc.). In some cases, workload may be measured via a performance monitoring unit of a host or memory pool appliance (e.g., CXL performance monitoring unit (CPMU)), etc.

In some cases, mapping table 400 may be associated with switch level data replication (e.g., CXL switch level data replication) inside a memory pooling device (e.g., memory pool appliance 305), where the switch level data replication may provide increased system reliability and data security.

When a fabric manager (e.g., fabric manager 315) allocates memory (e.g., vLD 340) to a host (e.g., host 310), a CXL switch (e.g., memory switch 320) may allocate multiple LDs from separated CMM devices (e.g., CMM-D, CMM-H, etc.) for one upstream port (USP) logical device (e.g., vLD) and maintain a logical device mapping table of the USP logical device to downstream port (DSP) LDs with associated device information.

In some examples, the CXL switch may maintain the mapping table between USP LD and DSP LDs (e.g., mapping table 400). When data comes to the CXL switch through one USP (e.g., a write command, store command), the CXL switch may store the data to the one or more DSP devices (e.g., data replication). When one DSP device fails, the data can be served from any available DSP device of the allocation, where the DSP device may be selected based on device status (e.g., workload, utilization, power, temperature, etc.).

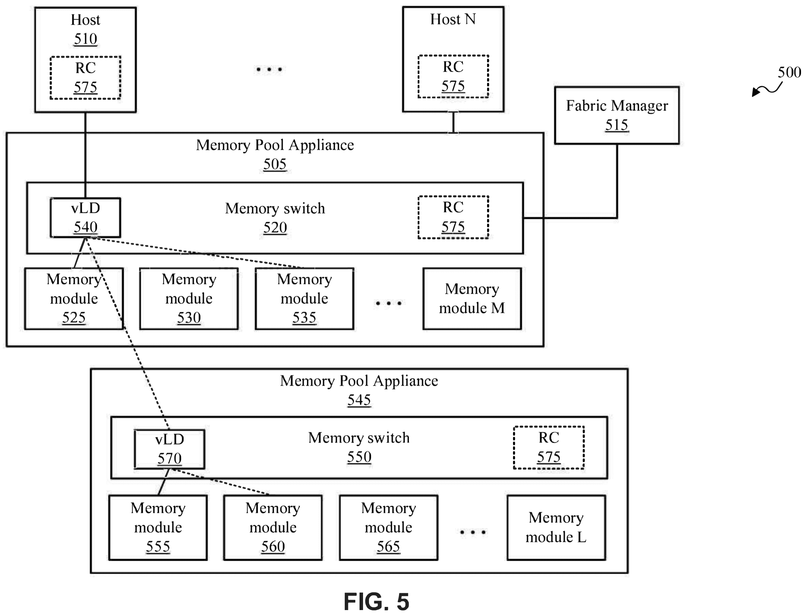

**FIG. 5** illustrates an example system 500 in accordance with one or more implementations as described herein. In some configurations, one or more aspects of system 500 may be implemented by a replication controller inside a memory pool appliance and/or in conjunction with replication controller 140 of FIG. 1 and/or replication controller 230 of FIG. 2. In some configurations, one or more aspects of system 500 may be implemented by or in conjunction with machine 105, components of machine 105, or any combination thereof. System 500 may be associated with cascaded switch topology.

In the illustrated example, system 500 may include memory pool appliance 505 (e.g., a first memory pool appliance), N hosts (e.g., including host 510, where N is a positive integer, such as 1, 10, 100, 1000, etc.), and fabric manager 515. As shown, memory pool appliance 505 may connect to one or more hosts (e.g., host 510). Memory pool appliance 505 may include memory switch 520 and M memory modules. Memory switch 520 may be based on, incorporate, and/or include a CXL switch. Memory switch 520 may be incorporated in an SoC. The depicted M memory modules may include one or more memory modules (e.g., memory module 525, memory module 530, memory module 535, etc.), where M is a positive integer (e.g., 1, 10, 100, 1000, etc.). The depicted M memory modules may include DRAM memory modules (e.g., CMM-D) and/or hybrid memory modules (e.g., CMM-H of DRAM and NAND flash memory). As shown, memory switch 520 may include vLD 540, which may be configured for an allocation (e.g., logical representation of an allocation, host allocation interface).

As shown, system 500 may include memory pool appliance 545 (e.g., at least a second memory pool appliance). In the illustrated example, memory pool appliance 545 may include memory switch 550 and one or more memory modules. For example, memory pool appliance 545 may include L memory modules (e.g., memory module 555, memory module 560, memory module 565, etc.), where L is a positive integer (e.g., 1, 10, 100, 1000, etc.). The depicted L memory modules may include DRAM memory modules (e.g., CMM-D) and/or hybrid memory modules (e.g., CMM-H of DRAM and NAND flash memory). As shown, memory switch 550 may include vLD 570 (e.g., a second virtual memory module), which may be configured for an allocation (e.g., logical representation of an allocation, host allocation interface). In some cases, vLD 540 may provide a logical representation of an allocation that includes memory resources from memory pool appliance 505. In some examples, vLD 570 may provide a logical representation of the allocation (e.g., the same allocation) that includes memory resources from memory pool appliance 545.

In some examples, the data replication systems and methods described herein may be extended to cascaded switch topologies (e.g., based on system 500). For example, an active logical device (aLD) and/or a standby logical device (sLD) may be located in a first memory pool appliance (e.g., memory pool appliance 505), a second memory pool appliance (e.g., memory pool appliance 545) cascaded from the first memory pool appliance, etc. In some cases, fabric manager 515 may allocate memory resources of memory pool appliance 505 and/or memory pool appliance 545 to host 510 (e.g., to an application executing on host 510). Memory switch 520 may select memory module 525 as an active LD of the allocation, memory module 530 as a first standby LD, and memory module 535 as a second standby LD. In some cases, memory switch 520 may select vLD 570 as a third standby LD. In some examples, memory switch 520 may determine that memory module 530 is unavailable or inaccessible (e.g., offline, failed, lost power, etc.). In some examples, memory switch 520 may select vLD 570 to replace memory module 530.

From the perspective of memory switch 520, vLD 570 may appear as a memory module (e.g., one memory module) of the allocation, as vLD 540 may appear as a memory module (e.g., one memory module) to host 510. From the perspective of memory switch 550, vLD 570 may appear as a logical representation of memory modules of memory pool appliance 545 that are associated with the allocation (e.g., memory module 555, memory module 560). As shown, memory switch 550 may select memory module 555 as the active LD for memory operation requests received by vLD 570, and may select memory module 560 as a standby LD for memory operation requests received by vLD 570.

In some examples, memory switch 520 may receive, at vLD 540, a memory operation request from host 510. Memory switch 520 may select memory module 525 to handle the memory operation request. Memory switch 520 may select memory module 525 based on memory module 525 being the active LD of vLD 540 and/or based on a device selection policy of vLD 540 (e.g., based on workload, utilization, temperature, etc., of respective memory modules associated with the allocation, of memory modules linked to vLD 540). In some cases, memory switch 550 may provide to memory switch 520 device selection policy metrics (e.g., workload, utilization, temperature, etc., of memory modules linked to vLD 570). The device selection policy metrics may be based on metrics of memory modules linked to vLD 570 (e.g., memory module 555 and/or memory module 560, etc.). In some cases, memory switch 520 may configure vLD 570 as an active LD or a standby LD of vLD 540. Accordingly, when memory switch 520 selects a memory module based on device selection policy metrics, memory switch 520 may select memory module 525, vLD 570, or memory module 535 based on the respective metrics available to memory switch 520.

In some examples, memory switch 520 may determine that memory module 525 is unavailable or inaccessible. Accordingly, memory switch 520 may select vLD 570 to handle the memory operation request instead of memory module 525 (e.g., based on device selection policy metrics). Memory switch 550 may then select memory module 555 based on memory module 555 being the active LD of vLD 570 and/or based on a device selection policy of vLD 570 (e.g., based on workload, utilization, temperature, etc., of respective memory modules associated with the allocation, of memory modules linked to vLD 570). In some cases, memory switch 550 may select memory module 560, or some other standby LD linked to vLD 570.

As shown, host 510 may include a replication controller (e.g., replication controller (RC) 575). Additionally, or alternatively, host N may include a replication controller (e.g., RC 575, an instance of RC 575) and/or memory switch 520 may include a replication controller (e.g., RC 575, an instance of RC 575). Additionally, or alternatively, memory switch 550 may include a replication controller (e.g., RC 575, an instance of RC 575). RC 575 may represent one resource controller in one device or multiple instances of resource controllers in multiple respective devices. One or more operations described herein may be performed at least partially by RC 575 in one or more devices of system 300. RC 575 may be implemented by or in conjunction with replication controller 140 of FIG. 1, replication controller 230 of FIG. 2, and/or RC 345 of FIG. 3. In some examples, RC 575 may provide an allocation of memory resources of memory pool appliance 505 to a host of system 500 (e.g., host 510). RC 575 may be configured to select a first memory module of multiple memory modules of memory pool appliance 505 (e.g., memory module 525) as a primary memory resource of the allocation. In some cases, RC 575 may be configured to select at least a second memory module of the multiple memory modules (e.g., memory module 530) as a secondary memory resource of the allocation. In some implementations, RC 575 may configure, in memory switch 520 and for the allocation, a virtual memory module (e.g., vLD 540) as an interface between host 510 and memory modules of the allocation. In some cases, RC 575 may execute a first command based on receiving, at vLD 540 and from host 510, a first command to read data from the allocation.

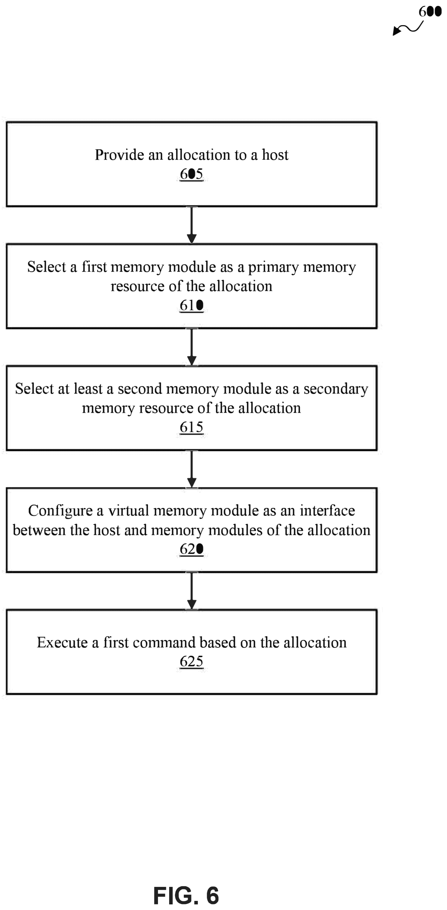

**FIG. 6** depicts a flow diagram illustrating an example method 600 associated with the disclosed systems, in accordance with example implementations described herein. In some configurations, one or more aspects of method 600 may be implemented by or in conjunction with replication controller 140 of FIG. 1 and/or replication controller 230 of FIG. 2. In some cases, one or more aspects of method 600 may be implemented by a replication controller in a memory pool appliance, a replication controller inside a memory switch, and/or in conjunction with a replication controller on the host side. In some configurations, one or more aspects of method 600 may be implemented by or in conjunction with machine 105, components of machine 105, or any combination thereof. The depicted method 600 is just one implementation and one or more operations of method 600 may be rearranged, reordered, omitted, and/or otherwise modified such that other implementations are possible and contemplated.

At 605, method 600 may include providing an allocation to a host. For example, allocation controller 140 (e.g., fabric manager 315) may provide an allocation of memory resources of memory pool appliance 305 to host 310.

At 610, method 600 may include selecting a first memory module as a primary memory resource of the allocation. For example, allocation controller 140 may select memory module 325 of memory pool appliance 305 as a primary memory resource of the allocation.

At 615, method 600 may include selecting at least a second memory module as a secondary memory resource of the allocation. For example, allocation controller 140 may select at least memory module 330 of memory pool appliance 305 as a secondary memory resource of the allocation.

At 620, method 600 may include configuring a virtual memory module as an interface between the host and memory modules of the allocation. For example, allocation controller 140 may configure (e.g., configure in memory switch 320 of memory pool appliance 305 and for the allocation) vLD 340 as an interface between host 310 and the memory modules assigned to the allocation.

At 625, method 600 may include executing a first command based on the allocation. For example, allocation controller 140 may execute a first command, received at the virtual memory module and from the host, to read data based on the allocation.

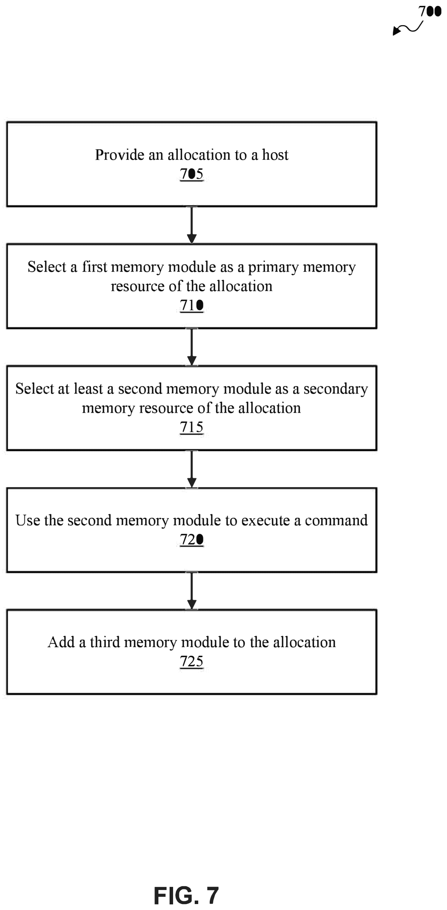

**FIG. 7** depicts a flow diagram illustrating an example method 700 associated with the disclosed systems, in accordance with example implementations described herein. In some configurations, one or more aspects of method 700 may be implemented by or in conjunction with replication controller 140 of FIG. 1 and/or replication controller 230 of FIG. 2. In some cases, one or more aspects of method 700 may be implemented by a replication controller in a memory pool appliance, a replication controller inside a memory switch, and/or in conjunction with a replication controller on the host side. In some configurations, one or more aspects of method 700 may be implemented by or in conjunction with machine 105, components of machine 105, or any combination thereof. The depicted method 700 is just one implementation and one or more operations of method 700 may be rearranged, reordered, omitted, and/or otherwise modified such that other implementations are possible and contemplated.

At 705, method 700 may include providing an allocation to a host. For example, allocation controller 140 (e.g., fabric manager 315) may provide an allocation of memory resources of memory pool appliance 305 to host 310.

At 710, method 700 may include selecting a first memory module as a primary memory resource of the allocation. For example, allocation controller 140 may select memory module 325 of memory pool appliance 305 as a primary memory resource of the allocation.

At 715, method 700 may include selecting at least a second memory module as a secondary memory resource of the allocation. For example, allocation controller 140 may select at least memory module 330 of memory pool appliance 305 as a secondary memory resource of the allocation.

At 720, method 700 may include using the second memory module to execute a command associated with the allocation. For example, allocation controller 140 may receive a command from host 310 and select memory module 330 to execute the command. In some cases, allocation controller 140 may select memory module 330 to execute the command based on allocation controller 140 determining that memory module 325 is inaccessible (e.g., memory module 325 is offline, memory module 325 has failed).

At 725, method 700 may include adding a third memory module to the allocation. For example, allocation controller 140 may select the third memory module (e.g., memory module 335, memory module 565) to replace memory module 325 and add the third memory module to the allocation.

In the examples described herein, the configurations and operations are example configurations and operations, and may involve various additional configurations and operations not explicitly illustrated. In some examples, one or more aspects of the illustrated configurations and/or operations may be omitted. In some embodiments, one or more of the operations may be performed by components other than those illustrated herein. Additionally, or alternatively, the sequential and/or temporal order of the operations may be varied.

Certain embodiments may be implemented in one or a combination of hardware, firmware, and software. Other embodiments may be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wired and/or wireless communication device such as a switch, router, network interface controller, cellular telephone, smartphone, tablet, netbook, wireless terminal, laptop computer, a femtocell, High Data Rate (HDR) subscriber station, access point, printer, point of sale device, access terminal, or other personal communication system (PCS) device. The device may be wireless, wired, mobile, and/or stationary.

As used within this document, the term "communicate" is intended to include transmitting, or receiving, or both transmitting and receiving. Similarly, the bidirectional exchange of data between two devices (both devices transmit and receive during the exchange) may be described as 'communicating', when only the functionality of one of those devices is being claimed. The term "communicating" as used herein with respect to wired and/or wireless communication signals includes transmitting the wired and/or wireless communication signals and/or receiving the wired and/or wireless communication signals. For example, a communication unit, which is capable of communicating wired and/or wireless communication signals, may include a wired/wireless transmitter to transmit communication signals to at least one other communication unit, and/or a wired/wireless communication receiver to receive the communication signal from at least one other communication unit.

Some embodiments may be used in conjunction with various devices and systems, for example, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some embodiments may be used in conjunction with one or more types of wireless communication signals and/or systems following one or more wireless communication protocols, for example, Radio Frequency (RF), Infrared (IR), Frequency-Division Multiplexing (FDM), Orthogonal FDM (OFDM), Time-Division Multiplexing (TDM), Time-Division Multiple Access (TDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{™}, Global Positioning System (GPS), Wi-Fi, Wi-Max, ZigBee^{™}, Ultra-Wideband (UWB), Global System for Mobile communication (GSM), 2G, 2.5G, 3G, 3.5G, 4G, Fifth Generation (5G) mobile networks, 3GPP, Long Term Evolution (LTE), LTE advanced, Enhanced Data rates for GSM Evolution (EDGE), or the like. Other embodiments may be used in various other devices, systems, and/or networks.

Although an example processing system has been described above, embodiments of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more components of computer program instructions, encoded on computer storage medium for execution by, or to control the operation of, information/data processing apparatus. Alternatively, or in addition, the program instructions can be encoded on an artificially-generated propagated signal, for example, a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (for example multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, for example, an FPGA or an ASIC. The apparatus can also include, in addition to hardware, code that creates an execution environment for the computer program in question, for example code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a component, component, subroutine, object, or other unit suitable for use in a computing environment. A computer program may, but need not, correspond to a file in a file system. A program can be stored in a portion of a file that holds other programs or information/data (for example one or more scripts stored in a markup language document), in a single file dedicated to the program in question, or in multiple coordinated files (for example files that store one or more components, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random-access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, for example magnetic, magneto-optical disks, or optical disks. However, a computer need not have such devices. Devices suitable for storing computer program instructions and information/data include all forms of non-volatile memory, media and memory devices, including by way of example semiconductor memory devices, for example EPROM, EEPROM, and flash memory devices; magnetic disks, for example internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, for example, a CRT (cathode ray tube) or LCD (liquid crystal display) monitor, for displaying information/data to the user and a keyboard and a pointing device, for example, a mouse or a trackball, by which the user can provide input to the computer. Other kinds of devices can be used to provide for interaction with a user as well; for example, feedback provided to the user can be any form of sensory feedback, for example visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, for example, as an information/data server, or that includes a middleware component, for example, an application server, or that includes a front-end component, for example, a client computer having a graphical user interface or a web browser through which a user can interact with an embodiment of the subject matter described herein, or any combination of one or more such back-end, middleware, or front-end components. The components of the system can be interconnected by any form or medium of digital information/data communication, for example, a communication network. Examples of communication networks include a local area network ("LAN") and a wide area network ("WAN"), an inter-network (for example the Internet), and peer-to-peer networks (for example ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (for example, an HTML page) to a client device (for example, for purposes of displaying information/data to and receiving user input from a user interacting with the client device). Information/data generated at the client device (for example, a result of the user interaction) can be received from the client device at the server.

While this specification contains many specific embodiment details, these should not be construed as limitations on the scope of any embodiment or of what may be claimed, but rather as descriptions of features specific to particular embodiments. Certain features that are described herein in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed to achieve desirable results. In certain circumstances, multitasking and parallel processing may be advantageous. Moreover, the separation of various system (500) components in the embodiments described above should not be understood as requiring such separation in all embodiments, and it should be understood that the described program components and systems (500) can generally be integrated together in a single software product or packaged into multiple software products.

## Claims

1. A method (600) comprising:
providing (605) an allocation of memory resources of a memory pool appliance (505) to a host (510);
selecting (610) a first memory module (525) among one or more memory modules (525-535) of the memory pool appliance (505) as a primary memory resource of the allocation;
selecting (615) at least a second memory module (530) among the one or more memory modules (525-535) as a secondary memory resource of the allocation;
configuring (620), in a memory switch (520) of the memory pool appliance (505) and for the allocation, a virtual memory module (540) as an interface between the host (510) and the one or more memory modules (525-535) of the allocation; and
executing (625) a first command, received at the virtual memory module (540) and from the host (510), to read data based on the allocation.

2. The method (600) of claim 1, wherein executing the first command further comprises reading the data from the second memory module (530) based on a memory module status of the first memory module (525) and the second memory module (530), the memory module status being determined by the memory switch (520).

3. The method (600) of claim 2, wherein:
the memory switch (520) selects the second memory module (530) based on the memory module status indicating the first memory module (525) is inaccessible, and
the memory switch (520) adds a third memory module (535) of the multiple memory modules to the allocation based on the first memory module (525) being inaccessible.

4. The method (600) of claim 2 or 3, wherein the memory switch (520) selects the second memory module (530) based on the memory module status indicating that the second memory module (530) has at least one of a lower load store frequency, a lower workload, or a lower memory capacity utilization than the first memory module (525).

5. The method (600) of any one of claims 2 to 4, wherein the memory switch (520) selects the second memory module (530) based on the memory module status indicating that the second memory module (530) has a lower temperate than the first memory module (525).

6. The method (600) of any one of claims 1 to 5, further comprising:
receiving, from the host (510), a second command to write second data to the allocation; and
writing, via the virtual memory module (540) and based on the second command, a first copy of the second data to the first memory module (525) and writing a second copy of the second data to the second memory module (530).

7. The method (600) of any one of claims 1 to 6, wherein the virtual memory module (540):
receives, from the host (510), commands associated with the allocation and executes the commands, and
presents, to the host (510), a logical representation of the allocation.

8. The method (600) of any one of claims 1 to 7, further comprising generating, via the memory switch (520), a mapping table that maps the virtual memory module (540) to the memory modules (525-535) of the allocation, the memory modules (525-535) of the allocation including the first memory module (525) and the second memory module (530).

9. The method (600) of any one of claims 1 to 8, wherein:
the allocation includes a fourth memory module (555) of a second memory pool appliance (545), and
the virtual memory module (540) is linked to the first memory module (525) and the second memory module (530) of the memory pool appliance (505) and to the fourth memory module (555) of the second memory pool appliance (545).

10. The method (600) of any one of claims 1 to 9, wherein:
the memory pool appliance (505), the memory switch (520), at least one memory module of the allocation, and the virtual memory module (540) operate according to a cache coherent protocol, and
the at least one memory module of the allocation comprises a dynamic random-access memory, DRAM, module configured to operate according to the cache coherent protocol or a hybrid memory module of DRAM and NAND flash memory configured to operate according to the cache coherent protocol.

11. A system (500) comprising:
a fabric manager (515) configured to provide an allocation of memory resources of a memory pool appliance (505) to a host (510); and
a memory switch (520) configured to:
select a first memory module (525) of multiple memory modules of the memory pool appliance (505) as a primary memory resource of the allocation;
select at least a second memory module (530) of the multiple memory modules as a secondary memory resource of the allocation;
configure, in the memory switch (520) and for the allocation, a virtual memory module (540) as an interface between the host (510) and memory modules (525-535) of the allocation; and
execute a first command based on receiving, at the virtual memory module (540) and from the host (510), the first command to read data from the allocation.

12. The system (500) of claim 11, wherein the memory switch (520) is configured to execute the first command further comprises the memory switch (520) configured to read the data from the second memory module (530) based on a memory module status of the first memory module (525) and the second memory module (530), the memory module status being determined by the memory switch (520).

13. The system (500) of claim 12, wherein:
the memory switch (520) is configured to select the second memory module (530) based on the memory module status indicating the first memory module (525) is inaccessible, and
the memory switch (520) is configured to add a third memory module (535) of the multiple memory modules to the allocation based on the first memory module (525) being inaccessible.

14. The system (500) of claim 12 or 13, wherein the memory switch (520) is configured to select the second memory module (530) based on the memory module status indicating that the second memory module (530) has at least one of a lower load store frequency, a lower workload, or a lower memory capacity utilization than the first memory module (525).

15. The system (500) of any one of claims 12 to 14, wherein the memory switch (520) is configured to select the second memory module (530) based on the memory module status indicating that the second memory module (530) has a lower temperate than the first memory module (525).
